# EUROPEAN PATENT APPLICATION

(11) **EP 3 388 178 A1**
(43) Date of publication of application: **17.10.2018**
(21) Application number: 16873002.6
(22) Date of filing: 07.12.2016
(51) Int. Cl.: B23D 65/00, B23D 61/12

(54) **METHOD FOR PRODUCING BANDSAW BLADE THAT LENGTHENS SERVICE LIFE OF BARREL MEMBER, AND BANDSAW BLADE**

(30) Priority: 10.12.2015 JP 2015240890
(71) Applicant: Amada Holdings Co., Ltd., Isehara-shi, Kanagawa 259-1196 (JP); Amada Machine Tools Co., Ltd, Isehara-shi, Kanagawa 259-1196 (JP)
(72) Inventor: NAGANO Yuji, Isehara-shi Kanagawa 259-1196 (JP); KOYABU Keita, Isehara-shi Kanagawa 259-1196 (JP)
(74) Representative: Grünecker Patent- und Rechtsanwälte PartG mbB
(86) International application number: PCT/JP2016/086329
(87) International publication number: WO 2017/099108

(57) **Abstract**

A manufacturing method of a band saw blade realizing a longer lifetime of a body member and a band saw blade. There is provided a manufacturing method of a band saw blade, comprising: (a) a step of forming a plurality of saw tooth mounts 5A, 5B equipped with cutting blade portions 9 at tip end parts, on a band shaped member 3 at appropriate intervals; and (b) a step of carrying out a chamfering processing 15A, 15B by a material removing processing method, on both side edges of a tooth bottom surface 13 in a garret portion 11 formed between respective ones of said saw tooth mounts 5A, 5B. By this, there is provided a band saw blade having a plurality of saw tooth mounts equipped with cutting blade portions at tip end parts, on a band shaped member at appropriate intervals, wherein both side edges of a tooth bottom surface in a garret portion formed between respective ones of said saw tooth mounts are chamfering processed by a material removing processing method.

## Description

### TECHNICAL FIELD

The present invention relates to a manufacturing method of a band saw blade and a band saw blade, and more specifically, to a manufacturing method of a band saw blade and a band saw blade in which both side edges of a tooth bottom surface in a garret portion of a band saw blade are chamfering processed.

### BACKGROUND TECHNIQUE

As already known, the band saw blade is equipped with a plurality of saw tooth mounts in an approximately triangular shape at appropriate intervals on a body member (a band shaped member). Then, a tip end part of each one of said saw tooth mounts is equipped with a cutting blade portion for carrying out a cutting of a workpiece such as a steel, for example. The above noted cutting blade portion is configured by high speed steel (HSS) or carbide chip and the like, for example. In order to accommodate and retain chips cut by said cutting blade portion and convey them out to an external of a workpiece, a garret portion is formed as a large concave portion between respective ones of said saw tooth mounts.

At a time of manufacturing the band saw blade in such a configuration, a processing of said saw tooth mounts and the garret portion is carried out on a body member by a milling processing, a cutting processing, a laser processing and the like. Therefore, on a tooth bottom surface in said garret portion, a contact surface contacting with chips cut by said cutting blade portion is formed at a time of the cutting processing (machining processing) of a workpiece. Then, on both sides of said tooth bottom surface, sharp edges with perpendicular cross sectional shapes are formed.

Here, as the high speed steel or the carbide chip and the like is used as the cutting blade portion, the abrasion resistance of a tooth tip is improved, and a longer lifetime of the band saw blade is realized. However, the band saw blade is configured in an endless shape, and used by winding around a driving wheel and a driven wheel of the band saw machine. Consequently, a tensile stress, a bending stress, and a torsional stress are repeatedly acting on the band saw blade. Then, as a larger size, a higher rigidity and a higher power of the band saw machine and a higher speed of the cutting speed are realized in recent years, a load acting on a body member of the band saw blade is becoming larger.

Namely, even though the improvement of the abrasion resistance of the cutting blade portion in the band saw blade is realized, a longer lifetime of a body member is desired. To this end, a realization of an improved lifetime of a body member by carrying out a shot peening on the garret portion of the band saw blade has been proposed (see Patent Document 1, for example).

### PRIOR ART DOCUMENT

### PATENT DOCUMENT

Patent Document 1: Japanese Patent Application Publication No. H8-505818

In said Patent Document I, it is described that a corner part of a bottom portion of the garret portion in the band saw blade is rounded, i.e., R chamfering is carried out, by the shot peening (see Fig. 3 of Patent Document 1). Said shot peening is carried out by spraying hard ceramic balls obliquely to said corner part.

By the way, regarding the shot peening, in Japanese Patent Application Publication No. 2011-110691, for example, it is described that the shot peening for projecting hard shot particles such as iron particles at high speed is carried out on a tooth tip edge portion of a tooth surface in a gear. Then, it is described that, when the shot peening is carried out to a ridgeline part of said tooth tip edge portion, the ridgeline part is pushed out by a projection impact of the shot particles and plastically deformed to generate an expanded portion.

Consequently, in the configuration as described in said Patent Document 1, when the shot peening is carried out to corner parts of both side edges (both side edges of a reference numeral 34 shown in Patent Document I) of the tooth bottom surface in the garret portion, a part of said corner parts is pushed out toward said bottom portion (34) side by the projection impact of the shot particles. Thus the plastic deformation occurs on said bottom portion (34) to generate an expanded portion, and a smooth surface of said bottom portion (34) is damaged. Here, if an attempt to make the R chamfering at the corner part of the bottom portion (34) larger is made, said expanded portion would also become larger, so that making the R chamfering larger is difficult.

In other words, in the case of carrying out the R chamfering at the corner part of said bottom portion (34) by the shot peening, in order to realize a longer lifetime of the band saw blade, making the R chamfering larger without generating the expanded portion on the tooth bottom surface is difficult.

### SUMMARY OF THE INVENTION

According to one aspect of the present invention, there is provided a manufacturing method of a band saw blade, comprising: (a) a step of forming a plurality of saw tooth mounts equipped with cutting blade portions at tip end parts, on a band shaped member at appropriate intervals; and (b) a step of carrying out a chamfering processing by a material removing processing method, on both side edges of a tooth bottom surface in a garret portion formed between respective ones of said saw tooth mounts.

Also, preferably, in said manufacturing method of a band saw blade, a chamfered amount B of said chamfering processing is in a relationship of 0.10 mm ≦ B ≦ t/2 - T/12, where T is a cutting margin of said band saw blade and t is a thickness of said band shaped member.

Also, preferably, in said manufacturing method of a band saw blade, said chamfering processing of the tooth bottom surface in said garret portion is carried out over a rake face and a flank in each one of said saw tooth mounts.

Also, preferably, in said manufacturing method of a band saw blade, the tooth bottom surface of said garret and a chamfering processed portion in which said chamfering processing was carried out are formed into a minute uneven surface with a residual compressive stress by carrying out a shot peening.

Also, preferably, in said manufacturing method of a band saw blade, said band saw blade has a contact surface contacting with chips generated at a time of cutting a workpiece, on the tooth bottom surface of said garret portion, said band saw blade has a portion exhibiting a straight line shape when said tooth bottom surface is cut with respect to a longitudinal direction of said band saw blade, on said tooth bottom surface, and there is a relationship of t - 2B = W ≧ T/6, where T is a cutting margin by said band saw blade, t is a thickness of said band shaped member, B is a chamfered amount of said chamfering processed portion, and W is a width dimension of said portion exhibiting a straight line shape.

According to another aspect of the present invention, there is provided a band saw blade having a plurality of saw tooth mounts equipped with cutting blade portions at tip end parts, on a band shaped member at appropriate intervals, wherein both side edges of a tooth bottom surface in a garret portion formed between respective ones of said saw tooth mounts are chamfering processed by a material removing processing method.

Also, preferably, in said band saw blade, a chamfered amount B is in a relationship of 0.10 mm ≦ B ≦ t/2 - T/12, where T is a cutting margin of said band saw blade, t is a thickness of said band shaped member, and B is a chamfered amount of a chamfering processed portion at both side edges of a tooth bottom surface in a garret portion formed between respective ones of said saw tooth mounts.

Also, preferably, in said band saw blade, said chamfering processed portion is formed over a rake face and a flank in each one of said saw tooth mounts.

Also, preferably, in said band saw blade, the tooth bottom surface of said garret portion and said chamfering processed portion are formed into a minute uneven surface with a residual compressive stress by carrying out a shot peening.

Also, preferably, said band saw blade is characterized by having a contact surface contacting with chips generated at a time of cutting a workpiece, on the tooth bottom surface of said garret portion, and having a portion exhibiting a straight line shape when said tooth bottom surface is cut with respect to a longitudinal direction of said band saw blade, on said tooth bottom surface, wherein there is a relationship of t - 2B = W ≧ T/6, where T is a cutting margin by said band saw blade, t is a thickness of said band shaped member, B is a chamfered amount of said chamfering processed portion, and W is a width dimension of said portion exhibiting a straight line shape.

According to the present invention, because a chamfering processing by a material removing processing method is carried out on both side edges of a tooth bottom surface in a garret portion of the band saw blade, a chamfered amount can be made larger, and a stress concentration on both side edges of said tooth bottom surface can be prevented. Therefore, a body part breaking in the band saw blade can be suppressed effectively, and a longer lifetime of a band saw blade can be realized.

### BRIEF DESCRIPTION OF THE DRAWINGS

Fig. 1 is a configuration diagram showing a configuration of a band saw blade according to an embodiment of the present invention.
Fig. 2 is an enlarged view of a cross sectional view corresponding to Fig. 1(C).
Fig. 3 is photographs showing a state in which scratches are generated by chips on a cutting surface of a workpiece and a normal state.
Fig. 4 is photographs showing chamfering processed states in a case of carrying out a shot peening on both side edges of a tooth bottom surface in a garret portion of the band saw blade.
Fig. 5 is a diagram showing a comparison of lifetimes of a body member in a case where a chamfered amount of a chamfering processing at both side edges of the tooth bottom surface is less than or equal to 0.09 and cases where a chamfering processing is C0.1 and C0.3.
Fig. 6 is a diagram summarizing test results showing that a body member has a longer lifetime when a chamfering processing of C0.1 or more is carried out on both side edges of the tooth bottom surface.

### EMBODIMENTS FOR IMPLEMENTING THE INVENTION

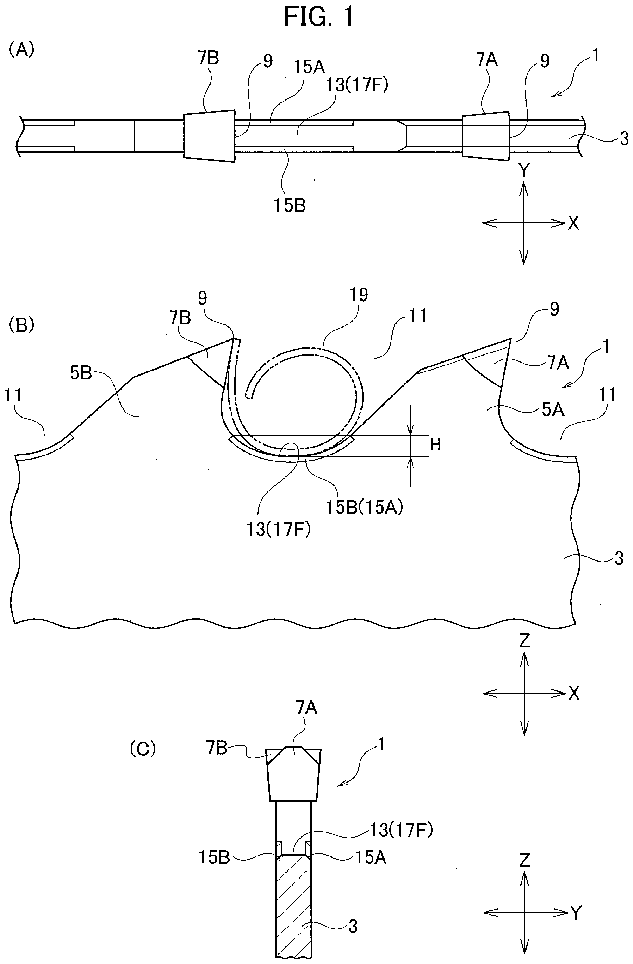

Referring to Fig. 1, the band saw blade 1 according to an embodiment of the present invention is equipped with a body member (band shaped member) 3 elongated in a left and right direction (X-axis direction) in Fig. 1(A) and (B). On one side in a width direction (Z-axis direction) in this body member 3, a plurality of saw tooth mounts 5A and 5B are provided in the X-axis direction (longitudinal direction of the band saw blade 1) at appropriate intervals. Then, on a tip end part of each of the saw tooth mounts 5A and 5B, a cutting blade member 7A, 7B forming a cutting blade portion 9 is provided integrally. Said cutting blade members 7A and 7B are configured from a high speed steel or a carbide chip, for example. Then, between respective ones of said saw tooth mounts 5A and 5B, a garret portion 11 as a respective large concave portion is provided.

Said cutting blade member 7A makes a leading tooth that cuts into a workpiece ahead, and the cutting blade member 7B makes a following tooth. The cutting blade member 7A as a leading tooth is configured as a bevel tooth, similarly as the band saw blade with general dovetail shaped set teeth. Said cutting blade member 7B as the following tooth makes an effect of enlarging a cutting groove that is cutting processed by said cutting blade member 7A, and a tooth height dimension from a reference position is configured to be lower than said cutting blade member 7A as the leading tooth. Note that an overall configuration of this type of band saw blade is well known, so that a detailed description about an overall configuration of the band saw blade will be omitted.

Said band saw blade 1 is manufactured similarly as the conventional band saw blade. Namely, the saw tooth mounts 5A and 5B are processed on the body member while the garret portion 11 is processed, by a milling processing, a cutting processing, a laser processing and the like. Then, at tip end parts of said saw tooth mounts 5A and 5B, the cutting blade members 7A and 7B are fixed integrally. Here, in a state where the saw tooth mounts 5A and 5B and the garret portion 11 are processed on the body member 3, both side edges of a tooth bottom surface in the garret portion are in a state where the chamfering processing is not carried out, that is they are formed into perpendicular sharp edges. Consequently, the stress concentration occurs easily at both side edges of the tooth bottom surface in the garret portion.

For this reason, in said band saw blade 1, in order to improve a lifetime of the body member (band shaped member) 3, chamfering processed portions 15A and 15B are formed on both side edges (both side edges in a thickness direction (Y-axis direction) of the body member 3) of the tooth bottom surface 13 in said garret portion 11. These chamfering processed portions 15A and 15B are formed over an appropriate range (which is a range of a height H from the tooth bottom surface 13, where a range of a height H is set to be a range from a height at which the tooth bottom surface chamfering processing can be checked at the garret that is upper part than the tooth bottom, to a height that is not overlapping with a tooth member or its joining part) for a rake face and a flank in respective ones of said saw tooth mounts 5A and 5B, from a portion of said tooth bottom surface 13. Shapes of said chamfering processed portions 15A and 15B may be C chamfering or R chamfering. Moreover, an angle at a time of the C chamfering may be set to an angle other than 45° such as 30°, for example.

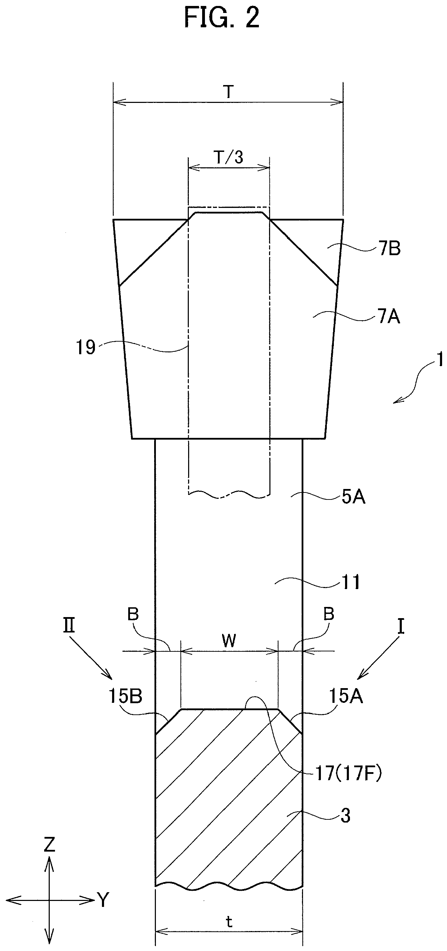

Said chamfering processed portions 15A and 15B are processed by removing parts of both side edges at the tooth bottom surface 13 by a grinding processing, a cutting processing, a laser processing and the like, for example. In other words, the processing of the chamfering processed portions 15A and 15B is carried out by a material removing processing method (said grinding processing, cutting processing, laser processing, etc.) that removes materials without imparting a large plastic deformation to said both side edges. Consequently, it is easy to set a chamfered amount B (see Fig. 2) of said chamfering processed portions 15A and 15B to be a size greater than or equal to 0.1 mm, for example.

As described above, the band saw blade 1 is in a configuration equipped with large chamfering processed portions 15A and 15B on both side edges of the tooth bottom surface 13. Consequently, the stress concentration acting on both side edges at the tooth bottom surface 13 can be mitigated, and a longer lifetime of the body member 3 in the band saw blade 1 can be realized. Note that the chamfered amounts and the shapes of the chamfering processed portions 15A and 15B on both sides are preferably equal. However, even in the case where the chamfered amounts or the chamfering shapes (R chamfering, C chamfering, for example) are different, the stress concentration can be mitigated. Namely, it suffices for the chamfering processed portions 15A and 15B to have sizes that can realize a longer lifetime of the body member 3 by mitigating the stress concentration on both side edges of the tooth bottom surface 13.

Now, when the body member (band shaped member) 3 in said band saw blade 1 is cut at a plane orthogonal with respect to the longitudinal direction (X-axis direction) of the band saw blade 1 at the garret portion 11, a straight line portion 17 exhibiting a straight line shape is formed on said tooth bottom surface 13, as shown in Fig. 2. Then, the cross sections of said chamfering processed portions 15A and 15B appear on both sides of said straight line portion 17. Said straight line portion 17 is a part of a contact surface 17F contacting with chips 19 generated in continuous forms at a time of the cutting of the workpiece (omitted to be shown in the figure) by said cutting blade member 7A.

Said contact surface 17F of said tooth bottom surface 13 effectuates a function for guiding when said chips 19 generated continuously are curling. Also, the contact surface 17F effectuates a function for accommodating and retaining the chips 19 within the garret portion 11, during a period until the garret portion 11 moves to an external of the workpiece, at a time of the cutting of the workpiece. Consequently, said contact surface 17F is formed as a smooth surface which is not inclined in a thickness direction (a left and right direction in Fig. 2) of the body member 3. Thus, the chips 19 generated continuously are guided to a stable state and accommodated and retained within the garret portion 11.

Now, as shown in detail in Fig. 2, the cutting blade member 7A as a leading tooth in the band saw blade I has a tooth tip side (an upper portion side in Fig. 2) formed as a bevel tooth in which a width is gradually reduced. Then, the cutting blade member 7B as a following tooth has a tooth tip side formed in a trapezoidal shape in which a width is gradually increased. Then, in this type of dovetail shaped set band saw blade, in order to make the chips 19 finer, it is common to set a cutting margin of the cutting blade member 7A to be approximately T/3, where T is a cutting margin (cutting width) of the cutting blade member 7B as the following tooth.

Here, for the chips 19 generated by the cutting effect of said cutting blade member 7A to be stably guided and curled, and stably accommodated and retained at the tooth bottom surface 13 (the contact surface 17F) of the garret portion 11, it is necessary for a length W of said straight line portion 17 (a width of the contact surface 17F) to be a width greater than or equal to 1/2 of a width dimension (T/3) in the chips 19. In other words, when the length W of the straight line portion 17 becomes less than or equal to 1/2 of T/3, guiding and supporting of the chips 19 at the contact surface 17F becomes unstable, so that it becomes easier for the chips 19 to enter into a gap between the body member 3 and the cutting surface of the workpiece. Consequently, it is preferable for the width W of the contact surface 17F (the length of the straight line portion 17) to be W ≧ Cutting margin T × 1/3 × 1/2 = T/6.

Also, when t is the thickness of said body member 3 and B is the chamfered amount of the chamfering processed portions 15A and 15B, it can be expressed as W = t - 2B. Consequently, there is a relationship of t - 2B = W ≧ T/6. Thus, it is preferable for a relationship between the thickness t of the body member 3 and the chamfered amount B to be a relationship of B ≦ t/2 - T/12.

Here, a test to judge whether it is proper or not to set the length W of said straight line portion 17 to be W ≧ T/6 in a relationship with the cutting margin T was conducted. The test conditions are as follows.

| | |
|---|---|
| Band saw machine | CTB400 manufactured by Amada |
| Band saw blade | AXEELA G manufactured by Amada |
| Saw blade size | width 41mm × thickness 1.3mm × length 4715mm × pitch 1.8/2P |
| Member to be cut | SKD61 *φ* 252 |
| Saw speed | 60m/minute |
| Cutting time | 8 minutes 18 seconds/cut |
| Wet type | Water soluble cutting oil SD manufactured by Amada |

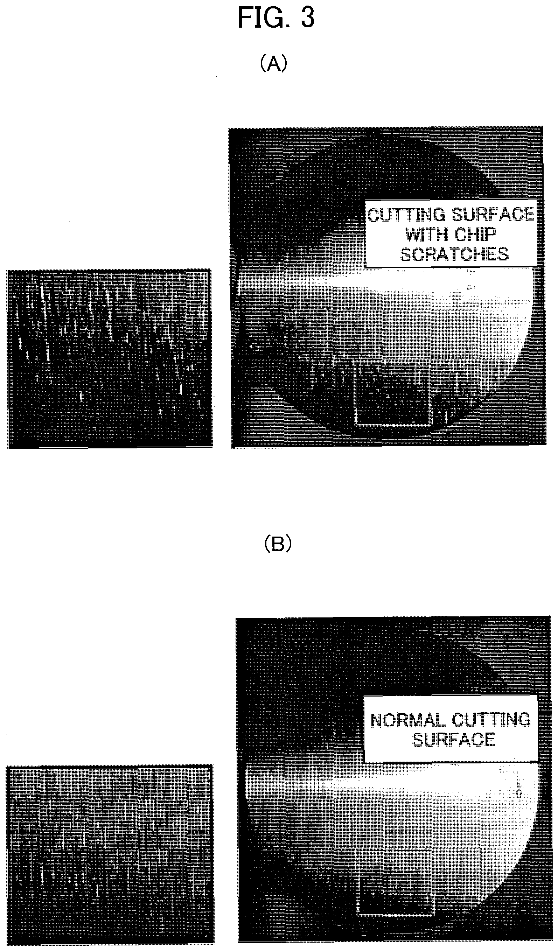

In said band saw blade, three sets of the band saw blades in which the length W of the straight line portion 17 was processed to be 0-0.2 mm, 0.2-0.35 mm, and 0.35-0.50 mm were prepared. Then, when the cutting of the workpiece was carried out, in two saw blades with the length of the straight line portion 17 of 0-0.2 mm, 0.2-0.35 mm, scratches due to the chips were generated on the cutting surface of the workpiece, as shown in Fig. 3(A). However, no scratch due to the chips was generated in the case where the length of the straight line portion 17 is 0.35-0.50 mm, as shown in Fig. 3(B).

The length 0.35 mm of said straight line portion 17 is a length nearly equal to 1/6 (0.37 mm) of the cutting margin T of the band saw blade 1. Consequently, it is preferable to have W ≧ T/6 in a relationship between the length W of the straight line portion 17 and the cutting margin T.

Now, when it becomes W < T/6 in a relationship between the length W of the straight line portion 17 and the cutting margin T, a width of the contact surface 17F in the tooth bottom surface 13 becomes smaller, and accommodating and retaining the chips 19 within the garret portion 11 becomes unstable. Namely, when it becomes W < T/6, the chamfered amount B on both sides in the tooth bottom surface 13 becomes larger. Consequently, it becomes easier for the chips 19 within the garret portion 11 to enter into a slight gap between a side surface of the band saw blade 1 and the cutting surface of the workpiece, and it is considered that scratches are generated on the cutting surface of the workpiece. Consequently, it is preferable for a relationship between the length W of the straight line portion 17 and the cutting margin T to be W ≧ T/6.

Now, at a time of processing the chamfering processed portions 15A and 15B on both side edges of the tooth bottom surface 13 in the garret portion 11 of the band saw blade 1, as described in said Patent Document 1, when the shot peening is carried out by projecting hard shot particles such as iron particles on both side edges from a direction inclined by 45° with respect to said tooth bottom surface 13 (a direction of arrows I, II shown in Fig. 2), the chamfering processed portions 15A and 15B can be formed on both side edges. However, when the shot peening is carried out by using hard shot particles such as iron particles, the expanded portion is generated on the tooth bottom surface 13, as described above. Consequently, at a time of carrying out the chamfering processing on both side edges of the tooth bottom surface 13, it is not preferable to carry out the shot peening by using hard shot particles.

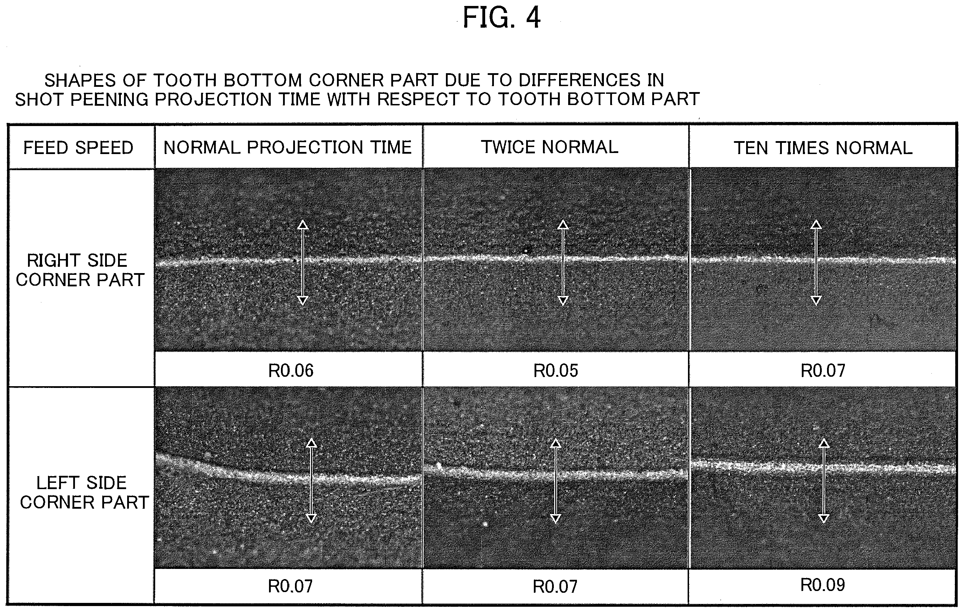

For this reason, in order to check the chamfering effect by the shot peening, the shot peening was carried out by using aluminum particles as the shot particles with a high grindability in which the expanded portion is hardly generated. A target band saw blade is the tooth bottom surface 13 of the band saw blade SGLB manufactured by Amada, width 41mm × thickness 1.3mm × pitch 2/3P. Then, the shot particles are projected from a direction inclined by 45° with respect to said tooth bottom surface 13 (a direction of arrows I, II shown in Fig. 2, for example). At that time, particle diameters of the aluminum particles are 0.1 mm to 0.3 mm. Then, the shot peening projection time with respect to the tooth bottom portion 13 is in three sets of the normal common projection time, twice the normal projection time, and ten times the normal projection time. Measurement results at that time were as shown in Fig. 4. Note that Fig. 4 is enlarged photographs of the left and right chamfering processed portions in the tooth bottom portion 13 viewed from a direction inclined by 45°. Then, the chamfering processed portions are appearing as white lines at central portions of the photographs. In Fig. 4, a target band saw blade is the band saw blade SGLB manufactured by Amada, width 41mm × thickness 1.3mm × pitch 2/3P, and the measurement device is the 3D measurement microscope VR-3200 by Keyence Corp.

As apparent from Fig. 4, the chamfered amounts by the shot peening are small ones of R0.05 - R0.09.

Next, in order to check the effect in the case of carrying out the chamfering processing on both side edges of the tooth bottom surface 13, the band saw idling fatigue test was conducted. The band saw machine used at that time is HFA400S manufactured by Amada. Then, as the band saw blade, SGLB, width 41mm × thickness 1.3mm × length 4995mm × pitch 2/3P was used, and the band saw blades with the chamfering of R0.01-R0.05 carried out by the shot peening were prepared as the conventional products 1-6 and the band saw blades with the chamfering processing of R0.07-R0.09 carried out by the shot peening were prepared as the conventional products 7-8. Then, as the band saw blades of the embodiment, they were formed into minute uneven surfaces (satin like surfaces) with a residual compressive stress by carrying out the chamfering processing of C0.1 and C0.3 by the polishing processing, and carrying out the shot peening on the tooth bottom surface 13 and the chamfering processed portions 15A and 15B.

In said band saw machine, a diameter of the driving wheel and the driven wheel is 525 mm, a saw blade guide interval is 400 mm, a twist angle of the band saw blade is 90°, a saw speed is 80 m/minute, and a saw blade tension is 2500 kgf.

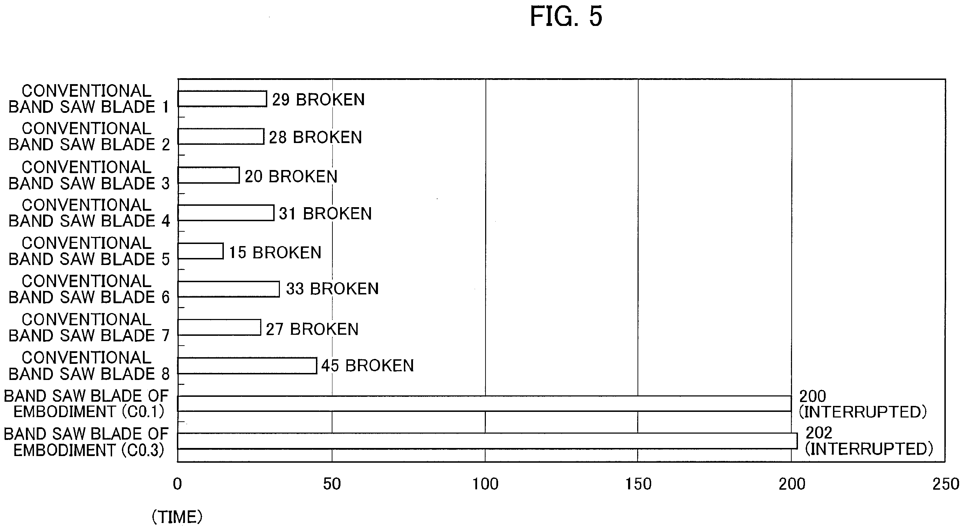

Test results were as shown in Fig. 5. As apparent from the results shown in Fig. 5, in a configuration in which the chamfering of less than or equal to R0.09 was carried out on both side edges of the tooth bottom surface 13 (a configuration of the conventional band saw blades in Fig. 5), the breaking of the body member 3 occurred within 50 hours. Then, in the band saw blades of the embodiment (chamfering of C0.1 and C0.3), no breaking occurred even after 200 hours elapsed. Consequently, even when the chamfering processing is carried out on both side edges of the tooth bottom surface 13 in the band saw blade, it is considered that it is difficult to mitigate the stress concentration effectively with the chamfered amount of less than or equal to 0.09 mm. Then, when the chamfered amount is made to be 0.1 mm and 0.3 mm, the stress concentration can be mitigated, and it is considered that the effect of a longer lifetime of the body member 3 is effectuated. Namely, it is preferable to make the chamfered amount to be greater than or equal to 0.1 mm.

Next, the cutting test was carried out by using a test stand manufactured by Amada. The above noted test stand is equipped with a driving wheel and a driven wheel with a diameter of 600 mm, to be freely rotatable horizontally. Consequently, the band saw blade can have a saw tooth tip pointing to a vertically downward direction, without being imparted with a twist angle. Then, between said driving wheel and driven wheel, a slit shaped saw blade guide is provided. Between this saw blade guide and a side surface of the band saw blade, a gap of 0.02 mm is imparted. This gap is of such a size that the band saw blade contacts with the saw blade guide, when the load at a time of the cutting of a workpiece by the band saw blade increases and a cutting-bending becomes large.

As the band saw blades for carrying out the test, in the band saw blades of AXCELA G manufactured by Amada, width 67mm × thickness 1.6mm × length 6224mm × pitch 1.8/2P, the band saw blade with the chamfered amount of R0.05, and the band saw blades (prototypes 1 and 2) in which the chamfering processing of C0.10-C0.20 and C0.30-C0.35 is carried out by the polishing processing were prepared. At a time of this test, the saw blade tension of 6500 kgf and the cutting oil of the water soluble cutting oil SD manufactured by Amada were used.

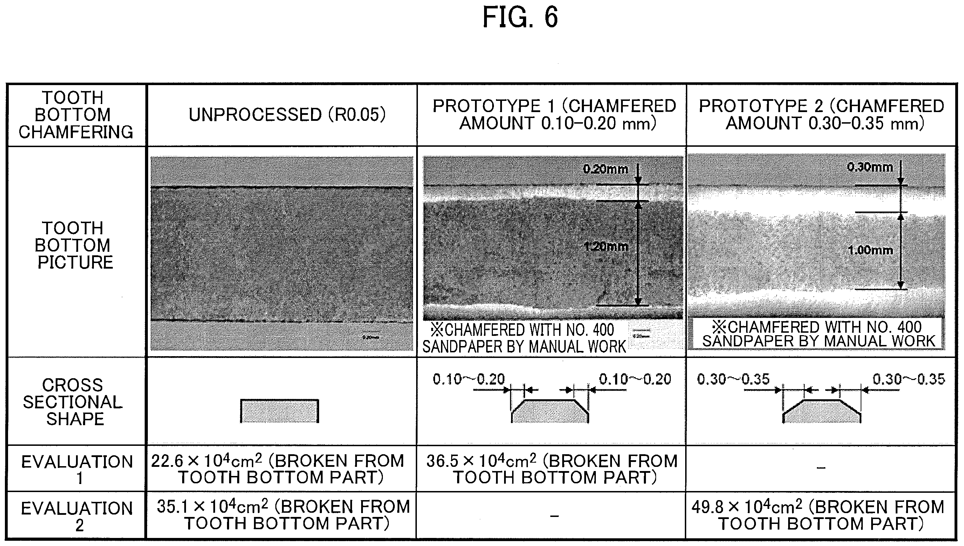

Here, as the evaluation 1, the cutting area (cm²) until SUJ3 *φ* 170 is broken under the condition of the blade speed of 180 m/minute and the cutting time of 46 seconds/cut was measured. Also, as the evaluation 2, the cutting area (cm²) until SCM440 *φ* 200 is broken under the condition of the blade speed of 200 m/minute and the cutting time of 40 seconds/cut was measured. Test results were as shown in Fig. 6. In Fig. 6, the blade evaluation test is to compare the cutting areas until the blade is broken in the real cutting time, the evaluation 1 is the cutting test by the dedicated cutting test stand: SUJ3 *φ* 170, the blade size of width 67mm × thickness 1.6mm × length 6224mm, the blade speed of 180 m/minute and the cutting time of 46 seconds/cut, and the evaluation 2 is the cutting test by the dedicated cutting test stand: SCM440 *φ* 200, the blade size of width 67mm × thickness 1.6mm × length 6224mm, the blade speed of 200 m/minute and the cutting time of 40 seconds/cut.

As apparent from Fig. 6, the prototype 1 with the chamfered amount of C0.10-C0.20 and the prototype 2 with the chamfered amount of C0.30-0.35 had longer lifetimes than the case of the band saw blade with the chamfered amount of R0.05. Consequently, it is preferable for the chamfered amount to be greater than or equal to 0.10 mm.

As understood from the above description, according to the present embodiment, the chamfering processing on both side edges of the tooth bottom surface 13 of the garret portion 11 in the band saw blade 1 is carried out by the material removing processing method such as the polishing processing and the cutting processing, for example. Consequently, it is possible to carry out the chamfering processing with the chamfered amount B larger than the case of carrying out the chamfering processing by the shot peening, for example. Consequently, the stress concentration at both side edges of the tooth bottom surface 13 can be mitigated, and a longer lifetime of the body member 3 can be realized.

Then, after carrying out the chamfering processing, the width dimension W of the contact surface 17F in the tooth bottom surface 13 is W ≧ T/6 when the cutting margin of the band saw blade 1 is T, so that the chips 19 generated by the cutting of the workpiece can be stably accommodated and retained within the garret portion 11.

Also, there is a relationship of 0.10 mm ≦ B ≦ t/2 - T/12, when the chamfered amount of the chamfering processing is B, the cutting margin of the band saw blade is T, and the thickness of the body member is t, so that a relationship of the chamfered amount B and the width dimension of said contact surface 17F becomes a proper one. Namely, it is possible to realize a longer lifetime of the body member 3 while suppressing the damaging of the cutting surface of the workpiece by the chips 19.

Also, the shot peening is carried out on the tooth bottom surface 13 and the chamfering processed portions 15A and 15B of the garret portion 11, so that it is possible to realize a longer lifetime of the body member 3.

Note that the present invention is not to be limited to the embodiment described above, and can be practiced in other embodiments by making appropriate modifications. Namely, the above description has described the band saw blade 1 which is the band saw blade with dovetail shaped set teeth. However, it is also possible to realize a longer lifetime of the body member in the setting band saw blade, by carrying out the chamfering processing on both side edges in the tooth bottom surface of the garret portion in the setting band saw blade equipped with the straight tooth and the left and right set teeth.

## Claims

1. A manufacturing method of a band saw blade, comprising:
(a) a step of forming a plurality of saw tooth mounts equipped with cutting blade portions at tip end parts, on a band shaped member at appropriate intervals; and
(b) a step of carrying out a chamfering processing by a material removing processing method, on both side edges of a tooth bottom surface in a garret portion formed between respective ones of said saw tooth mounts.

2. The manufacturing method of a band saw blade as described in claim 1, wherein a chamfered amount B of said chamfering processing is in a relationship of 0.10 mm ≦ B ≦ t/2 - T/12, where T is a cutting margin of said band saw blade and t is a thickness of said band shaped member.

3. The manufacturing method of a band saw blade as described in claim 1 or 2, wherein said chamfering processing of the tooth bottom surface in said garret portion is carried out over a rake face and a flank in each one of said saw tooth mounts.

4. The manufacturing method of a band saw blade as described in any one of claims 1 to 3, wherein the tooth bottom surface of said garret and a chamfering processed portion in which said chamfering processing was carried out are formed into a minute uneven surface with a residual compressive stress by carrying out a shot peening.

5. The manufacturing method of a band saw blade as described in any one of claims 1 to 4, wherein said band saw blade has a contact surface contacting with chips generated at a time of cutting a workpiece, on the tooth bottom surface of said garret portion, said band saw blade has a portion exhibiting a straight line shape when said tooth bottom surface is cut with respect to a longitudinal direction of said band saw blade, on said tooth bottom surface, and there is a relationship of t - 2B = W ≧ T/6, where T is a cutting margin by said band saw blade, t is a thickness of said band shaped member, B is a chamfered amount of said chamfering processed portion, and W is a width dimension of said portion exhibiting a straight line shape.

6. A band saw blade having a plurality of saw tooth mounts equipped with cutting blade portions at tip end parts, on a band shaped member at appropriate intervals, wherein both side edges of a tooth bottom surface in a garret portion formed between respective ones of said saw tooth mounts are chamfering processed by a material removing processing method.

7. The band saw blade as described in claim 6, wherein a chamfered amount B is in a relationship of 0.10 mm ≦ B ≦ t/2 - T/12, where T is a cutting margin of said band saw blade, t is a thickness of said band shaped member, and B is a chamfered amount of a chamfering processed portion at both side edges of a tooth bottom surface in a garret portion formed between respective ones of said saw tooth mounts.

8. The band saw blade as described in claim 6 or 7, wherein said chamfering processed portion is formed over a rake face and a flank in each one of said saw tooth mounts.

9. The band saw blade as described in any one of claims 6 to 8, wherein the tooth bottom surface of said garret portion and said chamfering processed portion are formed into a minute uneven surface with a residual compressive stress by carrying out a shot peening.

10. The band saw blade as described in any one of claims 6 to 9, wherein said band saw blade has a contact surface contacting with chips generated at a time of cutting a workpiece, on the tooth bottom surface of said garret portion, said band saw blade has a portion exhibiting a straight line shape when said tooth bottom surface is cut with respect to a longitudinal direction of said band saw blade, on said tooth bottom surface, and there is a relationship of t - 2B = W ≧ T/6, where T is a cutting margin by said band saw blade, t is a thickness of said band shaped member, B is a chamfered amount of said chamfering processed portion, and W is a width dimension of said portion exhibiting a straight line shape.
